**Europäisches Patentamt**

**European Patent Office**

**Office européen des brevets**

(19)

(11) Veröffentlichungsnummer : **0 322 634 B1**

(12) # EUROPÄISCHE PATENTSCHRIFT

(45) Veröffentlichungstag der Patentschrift :
14.08.91 Patentblatt 91/33

(51) Int. Cl.⁵ : **B60S 9/04**

(21) Anmeldenummer : 88120796.3

(22) Anmeldetag : 13.12.88

(54) Höhenverstellbare Stütze, insbesondere mittels Handkurbel betätigbare Stütze für Sattelanhänger.

(30) Priorität : 24.12.87 DE 8717019 U

(43) Veröffentlichungstag der Anmeldung :
05.07.89 Patentblatt 89/27

(45) Bekanntmachung des Hinweises auf die
Patenterteilung :
14.08.91 Patentblatt 91/33

(84) Benannte Vertragsstaaten :
DE ES FR GB IT

(56) Entgegenhaltungen :
DE-A- 3 642 079
US-A- 2 828 971
US-A- 4 634 144

(73) Patentinhaber : Haacon Hebetechnik GmbH
Josef-Haamann-Strasse 6
W-6982 Freudenberg/Main (DE)

(72) Erfinder : Hegmann, Paul
Odenwaldstrasse 14
W-8768 Bürgstadt (DE)
Erfinder : Mai, Roland
Am alten Fahr 47
W-6982 Kirschfurt (DE)
Erfinder : Trunk, Gerhard
Kirschfurter Strasse 6
W-6981 Collenberg (DE)
Erfinder : Riedl, Reinhold
Von-Berlichingen-Strasse 3
W-8760 Miltenberg (DE)

(74) Vertreter : Fuchs, Richard
Kantstrasse 18
W-8700 Würzburg (DE)

EP 0 322 634 B1

## Beschreibung

Die Erfindung bezieht sich auf eine höhenverstellbare Stütze, insbesondere mittels Handkurbel betätigbare Stütze für Sattelanhänger mit einem ausfahrbaren Stützenteil sowie mit einer Fußplatte und einem am unteren Ende des ausfahrbaren Stützenteils schwenkbar gelagerten und auf der Fußplatte abrollbaren Rollsegment, wobei die Fußplatte über ein elastisches Teil aus gummiartigem Material mit dem Rollsegment verbunden ist.

Derartige Stützen sind an der Unterseite von Sattelanhängern in deren vorderen Bereich in der Regel paarweise angeordnet und kommen immer dann zum Einsatz, wenn der Sattelanhänger von seiner Zugmaschine getrennt und für sich abgestellt wird. Bei luftgefederten Sattelanhängern ist es dabei bekannt, daß nach einer mehr oder weniger langen Standzeit (es genügt bereits eine Nacht), Luft aus den Federn entweicht, was zur Folge hat, daß der Heckbereich des Sattelanhängers absackt, so daß dieser eine schräge bzw. nach hinten geneigte Stellung in bezug auf die Bodenfläche des Abstellplatzes einnimmt. Dabei besteht die Gefahr, daß bei geschlossenen Bremsen die mit ihren Fußplatten auf dem Boden aufgelagerten Stützen nach vorne nicht ausweichen bzw. auswandern können und dadurch überlastet werden. Dies kann zum Verbiegen oder Aufreißen des Stützenrohres bzw. Aussenrohres der Stützen und der den Stützen zugeordneten Streben führen. Solche Stützen sind dann schwergängig oder sogar völlig unbrauchbar, wenn nämlich der ausfahrbare Stützenteil im Stützenaußenrohr blockiert ist. Eingerissene Stützen und/oder Streben können bei erneutem Einsatz auch zu schwerwiegenden Unfällen führen. Die gleichen Schäden können an den Stützen auch dann auftreten, wenn z.B. aufgrund eines Reifendefekts die Luft aus einem oder mehreren Reifen des Sattelanhängers entweicht, denn auch in diesem Fall sackt der Heckbereich des Sattelanhängers mehr oder weniger ab.

Höhenverstellbare Stützen der eingangs bezeichneten bekannten Bauart vermeiden die oben geschilderten Schwierigkeiten. Wenn sich nämlich ein abgestellter Sattelanhänger nach hinten neigt, können die Stützen ungehindert nach vorne auswandern, bzw. ausweichen, da ihre Rollsegmente auf den ortsfest ruhenden Fußplatten entsprechend abrollen können. Die Fußplatten sind hier mit dem Rollsegment jeweils durch eine Manschette aus einem elastischen gummiartigen Material verbunden, die praktisch die gesamte Oberseite der Fußplatte abdeckt und zugleich die Abrollfläche des Rollsegments mit deren Gegenlagerfläche an der Fußplatte in Berührung hält. Bei Aufhebung der Belastung der Stütze und Fußplatte bewirkt die Manschette aufgrund der Rückstellkraft ihres elastischen Materials die Rückführung der Fußplatte in eine Mittenstellung zur Stütze. Diese bekannte Konstruktion hat sich in der Praxis gut bewährt, ist jedoch für gewisse, weniger anspruchsvolle Anwendungsfälle zu aufwendig. Derartige Stützen sind aus (DE-OS 3642079) bekannt.

Der Neuerung liegt daher die Aufgabe zugrunde, eine höhenverstellbare Stütze der eingangs bezeichneten Art baulich zu vereinfachen, so daß sie in der Herstellung preiswerter kommt.

Gemäß der Neuerung wird obige Aufgabe dadurch gelöst, daß

a) das elastische Teil aus gummiartigem Material ein blockförmiges Pufferelement ist, welches in einem an der Fußplatte befestigten Käfig eingebaut ist ;

b) an dem Rollsegment ein sich in den Käfig erstreckender und in Eingriff mit dem Pufferelement stehender Stab oder dergleichen befestigt ist und

c) der Stab beim Abrollen des Rollsegments auf der Fußplatte in wenigstens einer an der Fußplatte und-/oder an dem Käfig befestigten Kulissenführung geführt ist, wodurch das Pufferelement durch den Stab elastisch deformierbar ist.

Wenn ein abgestellter Sattelanhänger sich infolge eines Luftverlustes in einem oder mehreren seiner Reifen oder bei vorhandener Luftfederung aufgrund eines Luftverlustes in seinen Federn nach einer gewissen Standzeit nach hinten neigt, können die Stützen ungehindert nach vorne ausweichen. Dabei rollen ihre Rollsegmente auf den ortsfest ruhenden Fußplatten ab, wobei der in der Kulissenführung geführte Stab das Pufferelement elastisch deformiert. Wenn die Belastung der Stützen aufgehoben wird, bewirkt die Rückstellkraft des elastischen Materials der Pufferelemente die Rückführung der Fußplatten in eine Mittenstellung zu ihren Stützen. Die Pufferelemente bestehen vorteilhaft aus einem einfachen blockförmigen Teil aus gummiartigem Material und auch der Käfig zur Halterung des Pufferelements ist ein einfaches, kostengünstig herzustellendes Bauteil. Aufgrund der neuerungsgemäßen Maßnahmen ergibt sich im Vergleich zum Stand der Technik eine wesentliche bauliche Vereinfachung, die zu der angestrebten Reduzierung der Herstellungskosten führt.

Ausgestaltungen der Neuerung gehen aus den Unteransprüchen hervor. So wird eine besonders zuverlässige Führung des Stabs zur elastischen Deformierung des Pufferelements beim Abrollen des Rollsegments auf der Fußplatte erreicht, wenn zwei Kulissenführungen für den Stab vorgesehen sind, die an den Seitenwänden des Käfigs ausgebildet sind.

Gemäß einer Weiterbildung der Neuerung werden zweckmäßig bei mittiger Anordnung nur einer Kulissenführung im Käfig zwei Pufferelemente seitlich der Kulissenführung vorgesehen.

Eine weiter verbesserte Stabilität im Fußbereich jeder Stütze wird baulich einfach erreicht, wenn am unteren Ende des ausfahrbaren Stützenteils zwei Rollsegmente seitlich beabstandet schwenkbar gelagert sind, welche den Käfig mit dem eingebauten Pufferelement seitlich übergreifen, wobei sich der mit dem Pufferelement in Eingriff befindliche Stab zwischen den zwei Rollsegmenten erstreckt und an diesen befestigt ist.

Noch eine weitere Ausgestaltung der Neuerung ist dadurch gekennzeichnet, daß die den Stab tragenden Rollsegmente am unteren Ende des ausfahrbaren Stützenteils nicht nur schwenkbar, sondern auch seitlich auslenkbar bzw. kippbar gelagert sind. Dadurch wird eine sichere Auflage der Fußplatte auch bei unebenen Abstellplätzen erreicht, ohne daß die oben geschilderte Auswanderung der Stützen nach vorne beeinträchtigt wird.

Wenn nach noch einer Weiterbildung der Neuerung das bzw. die Pufferelemente mit Hohlräumen versehen sind, bringt dies einerseits eine Materialeinsparung und andererseits eine Erhöhung der Elastizität des Pufferelements.

Eine andere Weiterbildung der Neuerung ist dadurch gekennzeichnet, daß das bzw. die Pufferelemente eine Bohrung zur passenden Aufnahme des Stabes aufweisen.

Die Lebensdauer der Pufferelemente läßt sich vorteilhaft dadurch erhöhen, daß das bzw. die Pufferelemente wenigstens an ihren von dem Stab beaufschlagbaren Flächen mit einer Verschleißhaut oder -Einlage versehen sind.

Noch eine weitere Ausgestaltung der Neuerung, die einen baulich besonders einfachen Käfig und ein relativ preiswertes Pufferelement ergibt, ist dadurch gekennzeichnet, daß der Käfig einen Blechabschnitt mit trapezförmigem Querschnitt aufweist, der mit seinen nach außen abgewinkelten Teilen an der Fußplatte befestigt ist, und daß das Pufferelement mit einem oberen Teil, z.B. der einen Hälfte passend in den Käfig eingebaut ist, während ein unterer Teil, z.B. die andere Hälfte gegenüber den nach außen abgewinkelten Teilen des Käfigs und/oder der Fußplatte beabstandet ist. Durch die zuletzt erwähnte Maßnahme ist gewährleistet, daß der beim Abrollen der Rollsegmente deformierte Teil des Pufferelements im Käfig Platz zum Ausweichen hat.

Noch eine weitere Ausgestaltung der Neuerung geht aus dem Anspruch 10 hervor und hat den Vorteil, daß der Stab 28 bereits mit seinen Rollsegmenten verschweißt von oben in die Kulissenführungen eingesetzt werden kann, bevor das Pufferelement eingelegt und der Käfig aufgeschweißt wird.

Die Neuerung wird anschließend anhand der Zeichnungen von Ausführungsbeispielen erläutert. Es zeigen :

Figur 1     eine Seitenansicht eines z.B. auf zwei Stützen aufgelagerten Sattelanhängers mit Luftfederung in Normalstellung ;

Figur 2     eine Seitenansicht des auf zwei Stützen aufgelagerten Sattelanhängers der Fig.1, jedoch nach einem Luftverlust in den Federn und dadurch bedingter Schrägstellung des Sattelanhängers mit nach vorne ausgewanderten Stützen ;

Figur 3     eine Seitenansicht vom unteren Teil einer Stütze nach den Figuren 1 und 2 mit der Fußplatte in normaler mittiger Stellung in bezug auf die Stützenachse, teilweise im Schnitt ;

Figur 4     eine Schnittansicht entlang der Linie A-A in Figur 3 ;

Figur 5     eine der Figur 4 ähnliche Schnittansicht, jedoch mit einer modifizierten Lagerung der Rollsegmente, welche eine Schrägstellung der Fußplatten im Falle von unebenen Abstellplätzen zuläßt ;

Figur 6     eine Ansicht der Rollsegmente, des Käfigs mit dem Pufferelement sowie der Fußplatte einer Stütze von oben, teilweise im Schnitt ;

Figur 7     eine der Figur 3 ähnliche Seitenansicht, in der jedoch die Stütze um das Ausmaß X 2 nach vorne ausgewandert ist ;

Figur 8     eine der Figur 3 ähnliche Ansicht, jedoch zum größten Teil im Schnitt und

Figur 9     eine der Figur 7 ähnliche Ansicht, jedoch gleichfalls zum größten Teil im Schnitt.

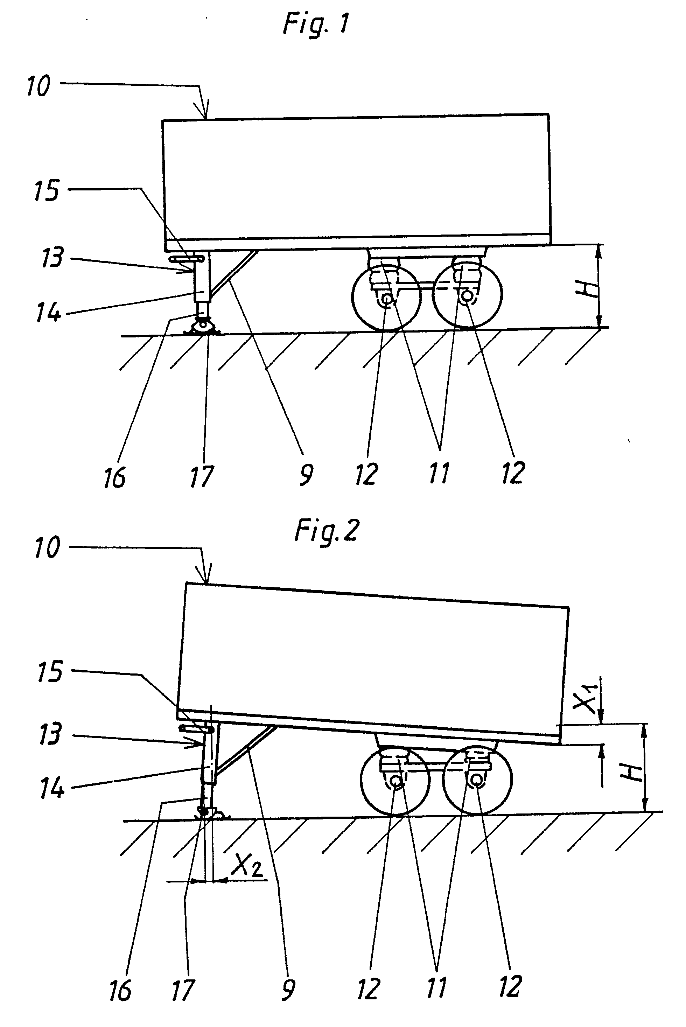

Die für die vorliegende Neuerung wesentlichen Bauteile und ihre Funktion werden nachstehend beispielsweise in Verbindung mit einem im Heckbereich abgesackten Sattelanhänger mit Luftfederung beschrieben. Der in den Figuren 1 und 2 gezeigte Sattelanhänger 10 weist eine Luftfederung 11 für seine zwei Radachsen 12 auf. Im vorderen Bereich des Sattelanhängers 10 sind an seiner Unterseite zwei höhenverstellbare Stützen 13 in seitlichem Abstand voneinander und symmetrisch zur Hänger-Längsachse befestigt. Bei den Stützen 13 kann es sich beispielsweise um sog. Spindelwinden handeln, welche durch Drehen einer Handkurbel 15 betätigt werden können. Die Stützen 13 weisen im einzelnen ein ortsfestes äußeres rohrförmiges Stützenteil 14 sowie ein inneres aus- bzw. einfahrbares rohrförmiges Stützenteil 16 auf. Zwischen jedem äußeren rohrförmigen Stützenteil 14 und der Unterseite des Sattelanhängers 10 ist eine Strebe 9 angeordnet, die den Stützen 13 zusätzliche Stabilität verleiht, wenn der Sattelanhänger 10, wie in den Figuren 1 und 2 gezeigt ist, auf den Stützen 13 aufgelagert ist.

Unmittelbar nach dem Abhängen des Sattelanhängers 10 von seiner nicht gezeigten Zugmaschine und Auflagerung seines vorderen Teils über die beiden Stützen 13 auf dem Boden des Abstellplatzes, nimmt der

EP 0 322 634 B1

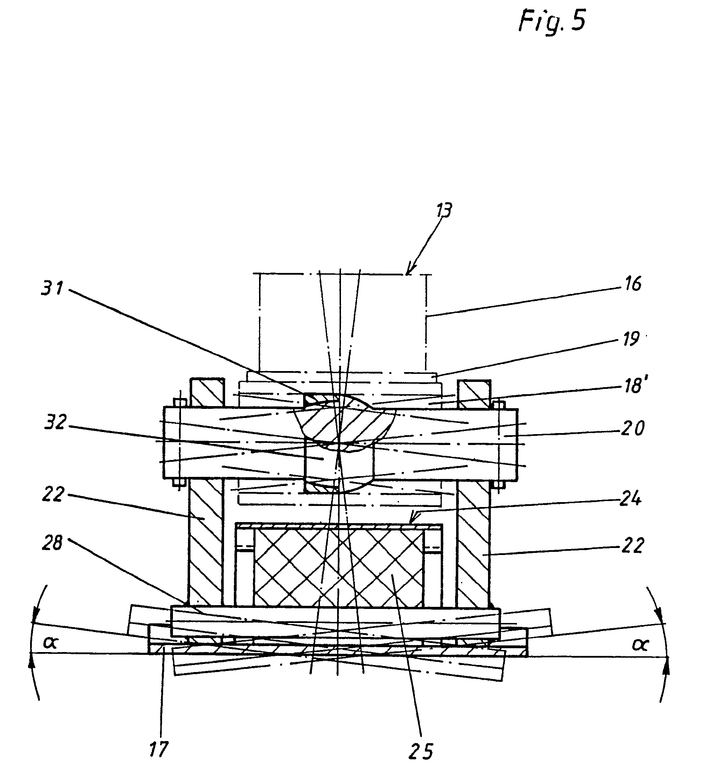

Sattelanhänger 10 die in Figur 1 gezeigte Normalstellung ein, in welcher der Abstand H seiner Unterseite zum Boden über die Länge des Hängers im wesentlichen gleich ist. Nach einer gewissen Zeitspanne tritt jedoch in der Luftfederung 11 ein unvermeidlicher Luftverlust auf, der dazu führt, daß der Heckbereich des Sattelanhängers 10 absackt. Der Sattelanhänger 10 nimmt dann die in Figur 2 gezeigte Schrägstellung ein. Eine ähnliche Schrägstellung kann ein abgestellter Sattelanhänger auch einnehmen, wenn Luft aus seinen Reifen entweicht. Der Abstand des Hecks des Sattelanhängers 10 vom Boden beträgt jetzt nur noch H − X 1. Im Verlauf dieser allmählich stattfindenden Schrägstellung des Sattelanhängers 10, die in Figur 2 zur Erleichterung des Verständnisses der Neuerung übertrieben dargestellt ist, wandern die an der Unterseite des Sattelanhängers 10 ortsfest angeordneten Stützen 13 um die Strecke X 2 nach vorne aus. Die Fußplatten 17 der Stützen 13 verbleiben dabei in ihren ursprünglichen Lagen auf dem Boden. Dabei können die Fußplatten 17, je nach der Oberfläche des Bodens, in Abweichung von den Figuren 1 und 2 auch in Längsrichtung und bei der Ausführungsform nach Figur 5 auch in Querrichtung geneigte Stellungen einnehmen.

Am unteren Ende des aus- bzw. einfahrbaren Stützenteils 16 jeder Stütze 13 ist ein eine Lagerbuchse 18 tragendes Bauteil 19 befestigt, z.B. angeschweißt. Das Bauteil 19 weist zwei sich schräg nach unten und gegeneinander erstreckende Schenkel 21 auf, an deren Längsrändern die Lagerbuchse 18 angeschweißt ist. In der Lagerbuchse 18 ist eine Hohlwelle 20 drehbeweglich gelagert, auf der zwei Rollsegmente 22 befestigt sind. Die Rollsegmente 22 können mit ihrer Rollfläche 23 auf der Fußplatte 17 abrollen, wenn bei abgestelltem Sattelanhänger die Stützen 13 nach vorne auswandern, was noch erläutert wird.

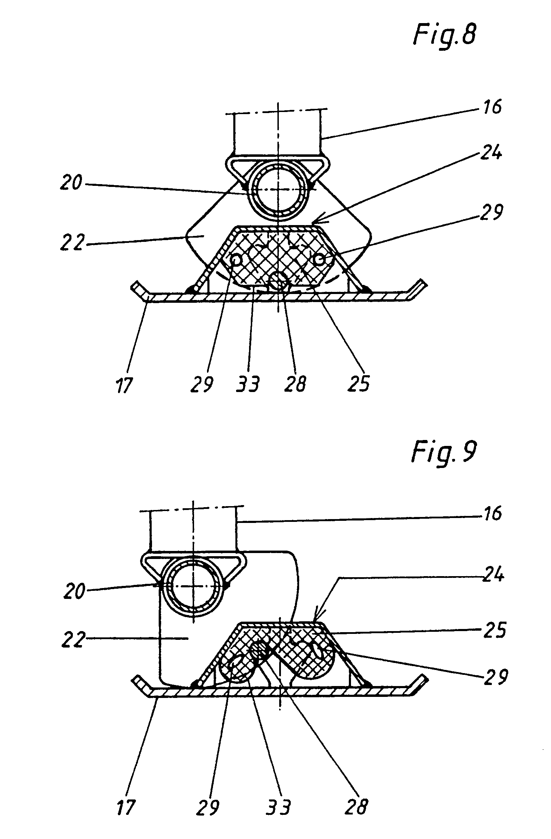

An der Oberseite der Fußplatte 17 ist ein Käfig 24 befestigt, in dem ein blockförmiges Pufferelement 25 aus einem elastischen gummiartigen Material eingebaut ist. Der Käfig 24 besteht im einzelnen aus einem streifenförmigen Blechabschnitt, der zweimal so abgewinkelt ist, daß ein trapezförmiger Querschnitt entsteht. Die Ränder der nach außen abgewinkelten Teile 8 des Käfigs 24 sind an der Fußplatte 17 angeschweißt (vergleiche auch Figuren 8 und 9). Zwei Seitenwände 26, die am Käfig 24 und an der Fußplatte 17 befestigt, z.B. angeschweißt sind, schließen den Käfig 24 seitlich ab. Die Seitenwände 26 enthalten aufeinander ausgefluchtete Kulissenführungen 27 für einen sich durch den Käfig 24 erstreckenden Stab 28, der an beiden Rollsegmenten 22 befestigt ist.

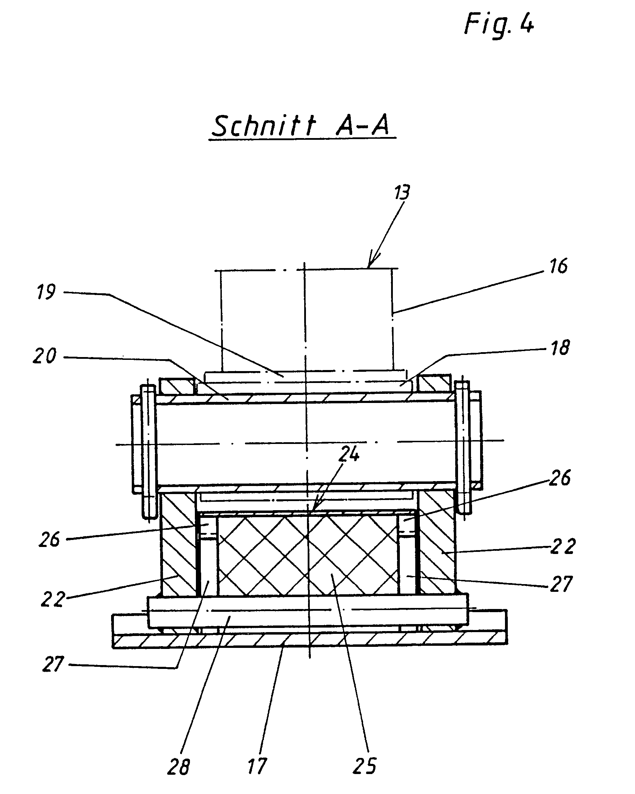

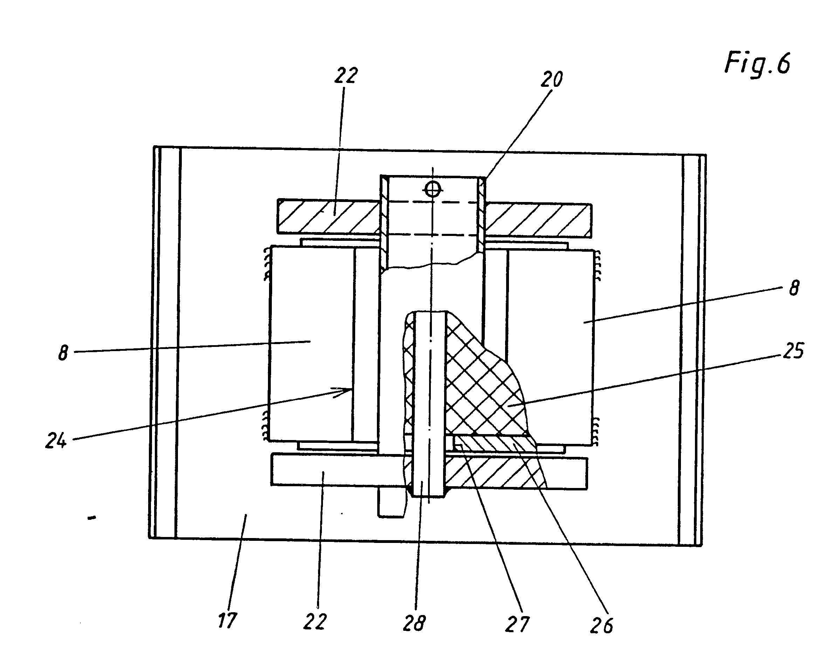

Das blockförmige Pufferelement 25 hat einen Querschnitt, dessen obere Hälfte dem oberen Teil des lichten Querschnitts des Käfigs 24 entspricht, wie aus Figur 8 hervorgeht. Mit dieser oberen Hälfte ist das Pufferelement 25 passend in den Käfig 24 eingesetzt. Die untere Querschnittshälfte des Pufferelements 25 entspricht spiegelbildlich dem Querschnitt der oberen Hälfte und weist gegenüber den nach außen abgewinkelten Teilen 25 des Käfigs 24 sowie gegenüber der Fußplatte 17 einen gewissen Abstand auf. Die Anordnung des Stabes 28 an den zwei Rollsegmenten 22 ist unter Berücksichtigung des Querschnitts des Pufferelements 25 so getroffen, daß sich der Stab 25 beim Zusammenbau der Teile in das Pufferelement 25 eindrückt, wie aus Figur 8 hervorgeht. In dem Pufferelement 25 können Hohlräume 29 z.B. in Form von durchgehenden Bohrungen vorgesehen sein, um dessen Deformierbarkeit zu verbessern. Wie insbesondere aus den Figuren 4 und 6 hervorgeht, ist die Anordnung ferner so getroffen, daß die beiden Rollsegmente 22 den Käfig 24 mit dem eingebauten Pufferelement 25 seitlich mit etwas Spiel übergreifen.

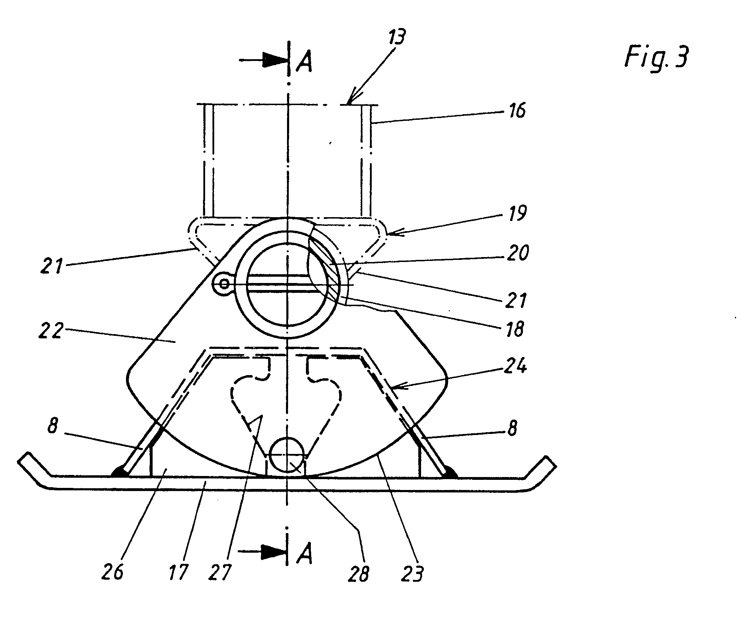

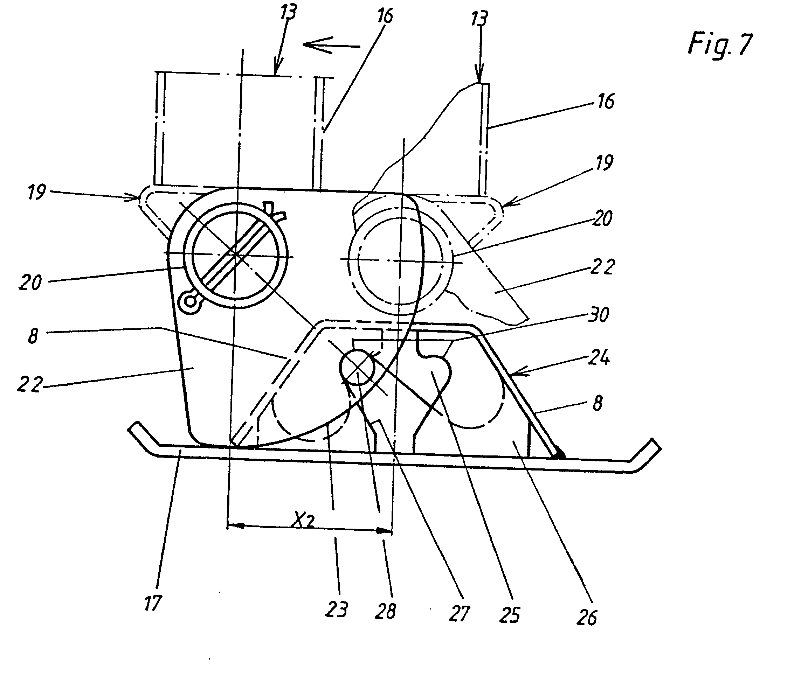

Die Figur 3 zeigt die Fußplatte 17 in ihrer Mittenstellung zur Stütze 13. Die Figur 7 veranschaulicht eine aufgrund einer entsprechenden Schrägstellung des Sattelanhängers 10 z.B. infolge Luftverlustes in den Federn 11 nach vorne in Pfeilrichtung um die Strecke X 2 ausgewanderte Stütze 13. Während dieser Auswanderung rollen die Rollsegmente 22 mit ihren Rollflächen 23 auf der Fußplatte 17 ab und gelangen in die in Figur 7 links gezeigte Stellung. Das Pufferelement 25 wird dabei durch den links nach oben wandernden Stab 28 entsprechend den Figuren 7 und 9 deformiert, wobei der Stab 28 während seiner Bewegung in den Kulissenführungen 27 in den Seitenwänden 26 des Käfigs 24 geführt ist. Die Fußplatte 17 nimmt nach wie vor ihre ursprüngliche in Fig. 3 gezeigte Stellung ein, bleibt also am Boden ruhen. Die Abroll- bzw. Schwenkbewegung der Rollsegmente 22 wird bei der Auswanderung der Stütze 13 in Pfeilrichtung begrenzt durch den gemäß Fig. 7 linken Anschlag 30 an der Kulissenführung 27, mit dem der Stab 28 zusammenwirkt. In umgekehrter Bewegungsrichtung, also bei Schwenkung der Rollsegmente 22 im Uhrzeigersinn, wirkt der Stab 28 mit dem gemäß Fig. 7 rechten Anschlag 30 der Kulissenführung 27 zusammen.

Wenn die Belastung der Stützen 13 wieder aufgehoben und die Fußplatten 17 frei werden, bewirkt das elastisch deformierte Pufferelement 25, das gemäß den Figuren 7 und 9 in der linken Hälfte zusammengepresst und in der rechten Hälfte gedehnt ist, eine Rückstellung jeder Fußplatte 17 in die in Figur 3 gezeigte Mittenstellung in bezug auf die Stütze 13. Im Falle einer gewaltsamen Zerstörung der Pufferelemente 25 bleiben die Fußplatten 17 mit ihren Käfigen 24 an den Stäben 28 der Rollsegmente 22 hängen, können also nicht herabfallen und Schaden verursachen.

Die Abrollbewegung der Rollsegmente 22 während einer Stützenauswanderung kann beim Ausführungsbeispiel nach Figur 5 auch dann unbehindert erfolgen, wenn aufgrund entsprechender Bodenunebenheiten des Abstellplatzes die Fußplatte 17 gemäß Figur 5 in Querrichtung um den Winkel α geneigt auf dem Boden aufliegt.

4

Zu diesem Zweck erstreckt sich die Hohlwelle 20, an der die beiden Rollsegmente 22 befestigt sind, mit radialem Spiel durch die Lagerbuchse 18', welche mittig eine teilsphärische Wälzfläche 31 enthält, die mit einer entsprechenden balligen Wälzfläche 32 an der Hohlwelle 20 zusammenwirkt. Dadurch sind die Rollsegmente 22 am unteren Ende des ausfahrbaren Stützenteils 16 nicht nur schwenkbar, sondern auch quer in beiden Richtungen kippbar gelagert.

Wie aus den Figuren 8 und 9 hervorgeht, können die Pufferelemente 25 an ihrer mit dem Stab 28 zusammenwirkenden Fläche eine Verschleißhaut 33 aufweisen.

## Patentansprüche

1. Höhenverstellbare Stütze, insbesondere mittels Handkurbel betätigbare Stütze für Sattelanhänger mit einem ausfahrbaren Stützenteil sowie mit einer Fußplatte und einem am unteren Ende des ausfahrbaren Stützenteils schwenkbar gelagerten und auf der Fußplatte abrollbaren Rollsegment, wobei die Fußplatte über ein elastisches Teil aus gummiartigem Material mit dem Rollsegment verbunden ist, dadurch gekennzeichnet, daß

a) das elastische Teil aus gummiartigem Material ein blockförmiges Pufferelement (25) ist, welches in einem an der Fußplatte (17) befestigten Käfig (24) eingebaut ist ;

b) an dem Rollsegment (22) ein sich in den Käfig (24) erstreckender und in Eingriff mit dem Pufferelement (25) stehender Stab (28) oder dergleichen befestigt ist und

c) der Stab (28) beim Abrollen des Rollsegments (22) auf der Fußplatte (17) in wenigstens einer an der Fußplatte (17) und/oder an dem Käfig (24) befestigten Kulissenführung (27) geführt ist, wodurch das Pufferelement (25) durch den Stab (28) elastisch deformierbar ist.

2. Stütze nach Anspruch 1, dadurch gekennzeichnet, daß zwei Kulissenführungen (27) für den Stab (28) vorgesehen sind, die an den Seitenwänden (26) des Käfigs (24) ausgebildet sind.

3. Stütze nach Anspruch 1, dadurch gekennzeichnet, daß bei mittiger Anordnung nur einer Kulissenführung im Käfig zwei Pufferelemente seitlich der Kulissenführung vorgesehen sind.

4. Stütze nach einem der Ansprüche 1-3, dadurch gekennzeichnet, daß am unteren Ende des ausfahrbaren Stützenteils (16) zwei Rollsegmente (22) seitlich beabstandet schwenkbar gelagert sind, welche den Käfig (24) mit dem eingebauten Pufferelement (25) seitlich übergreifen, und daß sich der mit dem Pufferelement (25) in Eingriff befindliche Stab (28) zwischen den zwei Rollsegmenten (22) erstreckt und an diesen befestigt ist.

5. Stütze nach Anspruch 1 und 4, dadurch gekennzeichnet, daß die den Stab (28) tragenden Rollsegmente (22) am unteren Ende des ausfahrbaren Stützenteils (16) nicht nur schwenkbar, sondern auch seitlich auslenkbar bzw. kippbar gelagert sind.

6. Stütze nach Anspruch 1 oder 3, dadurch gekennzeichnet, daß das bzw. die Pufferelemente (25) mit Hohlräumen (29) versehen sind.

7. Stütze nach Anspruch 1, 3 oder 6, dadurch gekennzeichnet, daß das bzw. die Pufferelemente (25) eine Bohrung zur passenden Aufnahme des Stabes (28) aufweisen.

8. Stütze nach Anspruch 1, 3, 6 oder 7, dadurch gekennzeichnet, daß das bzw. die Pufferelemente (25) wenigstens an ihren von dem Stab (28) beaufgschlagbaren Flächen mit einer Verschleißhaut (33) oder -Einlage versehen sind.

9. Stütze nach einem der Ansprüche 1-8, dadurch gekennzeichnet, daß der Käfig (24) einen Blechabschnitt mit trapezförmigem Querschnitt aufweist, der mit seinen nach außen abgewinkelten Teilen (8) an der Fußplatte (17) befestigt ist, und daß das Pufferelement (25) mit einem oberen Teil, z.B. der einen Hälfte passend in den Käfig (24) eingebaut ist, während ein unterer Teil, z.B. die andere Hälfte gegenüber den nach außen abgewinkelten Teilen (8) des Käfigs (24) und/oder der Fußplatte (17) beabstandet ist.

10. Stütze nach einem der Ansprüche 1-9, dadurch gekennzeichnet, daß die Kulissenführungen (27) oben einen Einführschlitz für den Stab (18) aufweisen.

## Claims

1. Height-adjustable support, in particular a crank-handle operated support for semi-trailers with an extendable part and with a base plate and a rolling segment swivellably mounted at the lower end of the extendable part of the support and rollable on the base plate, the base plate being connected to the rolling segment by way of an elastic part consisting of rubber-like material, characterised in that

a) the elastic part consisting of rubber-like material is a block-shaped buffer element (25) which is installed in a cage (24) fixed to the base plate (17) ;

b) a bar (28) or the like extending into the cage (24) and in engagement with the buffer element (25) is

5

fixed to the rolling segment (22) ;

c) on the rolling of the rolling segment (22) on the base plate (17), the bar (28) is guided in at least one slide guide (27) fixed to the base plate (17) and/or to the cage (24), whereby the buffer element (25) is elastically deformable by the bar (28).

2. Support according to Claim 1, characterised in that two slide guides (27) for the bar (28) are provided which are formed on the side walls (26) of the cage (24).

3. Support according to claim 1, characterised in that in the case of central arrangement of only one slide guide, two buffer elements are provided in the cage laterally of the slide guide.

4. Support according to any one of claims 1-3, characterised in that two rolling segments (22) are mounted swivellably and spaced apart laterally at the lower end of the extendable part (16) of the support and overlap the cage (24) with the installed buffer element (25) at the sides, and the bar (28) in engagement with the buffer element (25) extends between the two rolling segments (22) and is fixed to them.

5. Support according to claims 1 and 4, characterised in that the rolling segments (22) bearing the bar (28) are mounted not only swivellably at the lower end of the extendable part (16) of the support, but also so that they are laterally deflectable or tiltable.

6. Support according to claim 1 or 3, characterised in that the buffer element or elements (25) is or are provided with hollow spaces (29).

7. Support according to claim 1, 3 or 6, characterised in that the buffer element or elements (25) has or have a bore for suitable reception of the bar (28).

8. Support according to claim 1, 3, 6 or 7, characterised in that the buffer element or elements (25) is or are provided with a wear skin (33) or insert at least at the surfaces thereof which can be subjected to load by the bar (28).

9. Support according to any of claims 1-8, characterised in that the cage (24) has a sheet metal portion of trapezoidal cross-section which is fixed by its outwardly bent parts (8) to the base plate (17), and the buffer element (25) has an upper part, for example one half, installed in the cage (24) so that it fits it, while a lower part, for example the other half, is at a distance in relation to the outwardly bent parts (8) of the cage (24) and/or the base plate (17).

10. Support according to any one of claims 1-9, characterised in that the slide guides (27) have a slot at the top for introducing the bar (28).

**Revendications**

1. Chandelle de support réglable en hauteur, en particulier béquille pour semi-remorque susceptible d'être actionnée au moyen d'une manivelle, comportant une pièce de béquille susceptible de sortir ainsi qu'une semelle ou plaque de base et un segment roulant monté de façon pivotante à l'extrémité inférieure de la pièce de béquille susceptible de sortir et susceptible de rouler sur la plaque de base, la plaque de base étant reliée au segment roulant par l'intermédiaire d'une pièce élastique réalisée en un matériau du genre du caoutchouc, béquille caractérisée en ce que

a) la pièce élastique réalisée en un matériau analogue au caoutchouc est un élément constituant un coussin ou tampon (25) en forme de bloc, qui est incorporé dans un logement (24) fixé sur la plaque de base ou semelle (17),

b) une tige (28) ou un élément similaire, s'étendant dans le logement (24) et qui est en prise avec l'élément constituant un coussin ou tampon (25) est fixée au segment roulant (22), et

c) la tige (28) est guidée dans au moins une coulisse (27) fixée à la plaque de base (17) et/ou au logement (24) lors du roulement du segment roulant (22) sur la plaque de base (17), ce qui entraîne le fait que l'élément constituant un coussin ou tampon (25) peut être déformé élastiquement par la tige (28).

2. Béquille selon la revendication 1, caractérisée en ce que deux coulisses (27) sont prévues pour la tige (28), lesquelles sont ménagées dans les parois latérales (26) du logement (24).

3. Béquille selon la revendication 1, caractérisée en ce que, dans le cas d'une disposition médiane d'une seule coulisse dans le logement, deux coussins ou tampons sont prévus, latéralement par rapport à la coulisse.

4. Béquille selon une des revendications 1 à 3, caractérisée en ce qu'à l'extrémité inférieure de la pièce (16) de béquille susceptible de sortir, deux segments roulants (22) sont montés de façon à pouvoir pivoter et à présenter une certaine distance latérale entre eux, ces segments entourant le logement (24) comportant l'élément (25) en forme de coussin ou de tampon et la tige (28) qui se trouve en prise avec l'élément (25) s'étend entre les deux segments roulants (22) et est fixée à ceux-ci.

5. Béquille selon les revendications 1 et 4, caractérisée en ce que les segments roulants (22) supportant la tige (28) ne sont pas seulement susceptibles de pivoter à l'extrémité inférieure de la pièce (16) de béquille susceptible de sortir, mais sont également montés de façon à pouvoir pivoter ou basculer latéralement

6. Béquille selon la revendication 1 ou 3, caractérisée en ce que le ou les éléments (25) en forme de coussin ou de tampon sont munis d'espaces creux (29).

7. Béquille selon la revendication 1, 3 ou 6, caractérisée en ce que le ou les éléments (25) en forme de coussin ou de tampon présentent un trou destiné à loger de façon ajustée la tige (28).

8. Béquille selon la revendication 1, 3, 6 ou 7, caractérisée en ce que le ou les éléments (25) sont munis, au moins sur leurs surfaces qui sont susceptibles d'être placées sous la contrainte de la tige (28), d'un revêtement (33) ou garniture d'usure.

9. Béquille selon l'une des revendications 1 à 8, caractérisée en ce que le logement (24) présente un morceau de tôle doté d'un profil trapézoïdal, qui est fixé sur la plaque de base (17) au moyen de ses parties (8) repliées vers l'extérieur, et en ce que l'élément (25) est incorporé de façon ajustée dans le logement (24) au moyen d'une partie supérieure, par exemple d'une moitié, tandis qu'une partie inférieure, par exemple l'autre moitié, se trouve à une certaine distance par rapport aux parties (8) du logement (24) repliées vers l'extérieur, et/ou par rapport à la plaque de base (17).

10. Béquille selon l'une des revendications 1 à 9, caractérisée en ce que les coulisses (27) présentent à leur partie supérieure une fente destinée à l'introduction de la tige (18).

**Fig. 1**

**Fig. 2**

*Fig. 3*

EP 0 322 634 B1

Fig. 4

Schnitt A-A

Fig. 5

Fig.6

Fig.7

**Fig.8**

**Fig.9**